# EUROPEAN PATENT SPECIFICATION

(11) **EP 0 632 198 B1**
(45) Date of publication and mention of the grant of the patent: **13.08.1997**
(21) Application number: 94304074.1
(22) Date of filing: 07.06.1994
(51) Int. Cl.: F02M 57/06

(54) **A spark plug having a fuel injector valve**
Zündkerze mit Kraftstoffeinspritzventil
Bougie d'allumage comportant un injecteur de combustible

(30) Priority: 30.06.1993 JP 161471/93
(43) Date of publication of application: 04.01.1995
(73) Proprietor: NGK SPARK PLUG CO., LTD, Nagoya-shi (JP)
(72) Inventor: Suzuki, Takahiro, c/o N G K Spark Plug Co.,Ltd., Mizuho-ku, Nagoya-shi (JP)
(74) Representative: Senior, Alan Murray

(56) References cited:
- EP-A- 0 307 651
- DE-A- 4 127 456
- US-A- 2 255 203
- US-A- 3 980 061

## Description

This invention relates to a spark plug having a fuel injector valve. The spark plug and fuel injector valve are integrally assembled so as to inject a fuel into a cylinder of an internal combustion engine.

Japanese Patent Provisional Publication No. 1-104961 discloses a fuel injector valve which is provided in a fuel passage of a centre electrode of the spark plug. Japanese Utility Model Provisional Publication No. 63-183371 discloses a fuel injector valve having a spark plug.

However, the fuel injector valve of the Japanese Patent Provisional Publication No. 1-104961 has no means to control the duration of valve opening. This poses a problem with response. Particularly for a direct injection type engine it is desired to quickly terminate fuel injection. In the spark plug disclosed in the Japanese Utility Model Publication No. 63-183371, there is a possibility that malfunction and damage may be incurred under the influence of high voltage since the electrical insulation between an electromagnetic coil and the high voltage applied to the spark plug is not fully considered.

US-A-3 980 061 discloses a spark plug wherein the coil is provided inwardly of an insulator at the top end of the spark plug. The centre electrode is also provided inwardly of an insulator at the bottom end of the spark plug.

According to the present invention there is provided a spark plug having a fuel injector valve comprising:
a metallic shell;
a columnar insulator having an axial bore and provided in the metallic shell, a front end of the insulator being fixedly secured in the metallic shell and a rear portion of the insulator extending rearwardly beyond the metallic shell;
a tubular centre electrode provided in the axial bore of the insulator, an inner space of the centre electrode forming a fuel passage and a front end of the centre electrode forming a fuel injection nozzle;
a magnetic valve body; and
a coil for electromagnetically actuating the magnetic valve body;
wherein a rear portion of the electrode extends rearwardly beyond the metallic shell, the magnetic valve body is provided in the fuel passage to open and close the fuel injection nozzle and the coil surrounds the rear portion of the insulator and the rear portion of the electrode.

There is thus provided a spark plug having a fuel injector valve in which the rear portion of the insulator effectively shields the coil from the influence of the high, spark discharge voltage applied to the centre electrode.

With the electromagnetic valve having a coil body embedded in a synthetic resin body which integrates a high voltage terminal connected to the center electrode, a connection passage connected to the fuel passage and a control voltage terminal connected to the coil body, it is possible to readily assemble the electromagnetic coil, the high voltage terminal and the fuel passage into the spark plug.

With a hollow ferromagnetic axis provided to a rear side of the axial bore of the insulator, the ferromagnetic axis forms a magnetic path so as to increase an attraction of the electromagnetic valve.

With a lifting amount of the valve body adjusted by a thickness of an annular ring, it is possible to substantially ensure a constant amount of injection.

With a cylindrical projection of the center electrode provided to form a spark discharge gap with a ground electrode, it is possible to protect the fuel injection nozzle against spark erosion in order to generally maintain a constant. injection for an extended period of time.

With a fuel collider means provided on an extension line of the fuel injection nozzle so as to impinge an injected fuel thereon, it is possible to break-up the fuel at the fuel collider means to smoothly evaporate it so as to improve ignition.

These and other advantages of the invention will be apparent upon reference to the following specification, attendant claims and drawings. In order that the invention may be better understood, the following description is given, only by way of example, with reference to the accompanying drawings in which:
Fig. 1 is a longitudinal cross sectional view of a spark plug having a fuel injector valve according to a first embodiment of the invention;
Fig. 2 is an enlarged perspective view of a lower end portion of a center electrode according to a modification form of the first embodiment of the invention;
Fig. 3 is a longitudinal cross sectional view of a spark plug having a fuel injector valve according to a second embodiment of the invention; and
Fig. 4 is an enlarged perspective view of a lower end portion of a center electrode according to a modification form of the second embodiment of the invention.

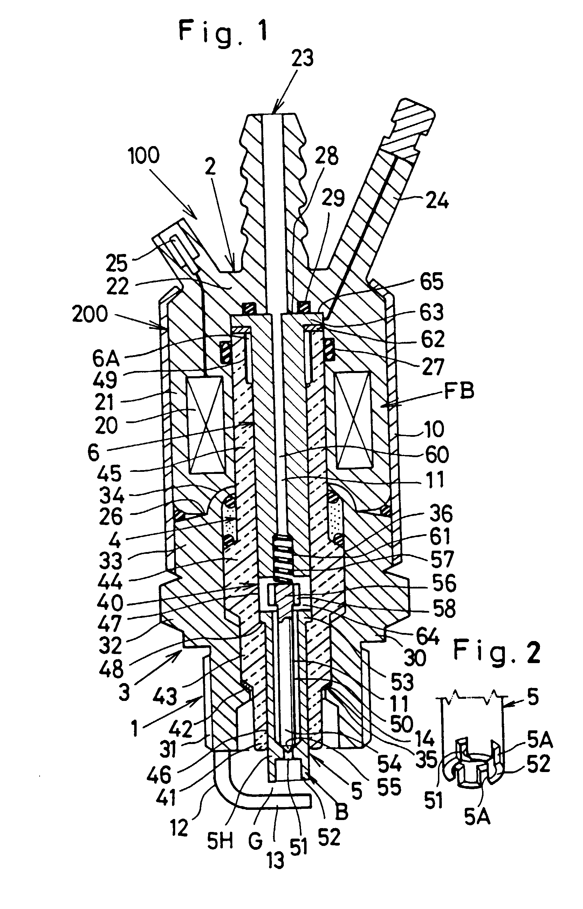

Referring to Fig. 1 which show a spark plug having a fuel injector valve as designated by numeral 100 according to a first embodiment of the invention, a spark plug 1 which is located at a lower half of the drawing is connected to an electromagnetic coil 200 by means of a metallic hoop 10 as described in detail hereinafter. The spark plug 1 has a cylindrical metallic shell 3 and a columnar insulator 4 which is placed in the metallic shell 3. The columnar insulator 4 has an axial bore 40 in which a tubular center electrode 5 is concentrically placed. An inner space of the center electrode 5 serves as a fuel passage 11, while a front end of the center electrode 5 acts as a fuel injection nozzle 51. The center electrode 5 is made of a heat and erosion-resistant nickel alloy such as Ni-Si-Mn-Cr-Al alloy, Ni-Cr- alloy or Ni-Cr-Fe alloy. To a front end of the metallic shell 3, a ground electrode 12 is welded which is bent into an L-shaped configuration 13. The L-shaped end 13 of the ground electrode 12 serves as a fuel collider means which is aligned with an extension line of the fuel injection nozzle 51.

To an outer surface of the metallic shell 3, a male thread portion 31, a hexagonal middle portion 32 and a gasket seat 30 are provided respectively to secure the spark plug 1 to the cylinder of the internal combustion engine. A rear end 33 of the metallic shell 3 is diametrically enlarged to define a cylindrical contour from which a thin caulking portion 34 is integrally extended. To a front portion of an inner surface of the metallic shell 3, a step portion 35 is provided. To a rear portion of the inner surface of the metallic shell 3, a diameter-enlarged portion 36 is provided.

The insulator 4 has a diameter-reduced leg portion 41 and a middle waist portion 43 provided through a step shoulder portion 42 which engages with the step portion 35 of the metallic shell 3. The insulator 4 further has a diametrically enlarged barrel portion 44 which is located in the diameter-enlarged portion 36 of the metallic shell 3, and having a middle head portion 45 which is protracted from the rear end of the metallic shell 3. The axial bore 40 of the insulator 4 includes a diameter-reduced hole 46 in corresponding to the leg portion 41 and the waist portion 43. The axial bore 40 further includes a diameter-enlarged hole 47 located at a rear side thereof, and having a step portion 48 provided between the diameter-reduced hole 46 and the diameter-enlarged hole 47. An inner wall of the diameter-enlarged hole 47 is further enlarged to form a female thread portion 49. In this situation, the insulator 4 is firmly supported in the metallic shell 3 by caulking the thin caulking portion 34, and at the same time, by engaging the step shoulder portion 42 with the step portion 35 of the metallic shell 3 through a packing 14.

Meanwhile, the center electrode 5 has a center electrode body 5H and having a hollow ferromagnetic middle axis 6 which is made of a nickel alloy including 45 ∼ 80 % Fe by weight. The center electrode body 5H is made of a hollow nickel alloy located at a front side of the axial bore 40, while the ferromagnetic middle axis 6 is located at a rear side of the axial bore 40. An inner space 50 of the center electrode body 5H serves as a part of a fuel passage 11, and a front end of the center electrode body 5H has a cylindrical projection 52 which is located in a manner to surround the fuel injection nozzle 51. A front end of the cylindrical projection 52 forms a spark discharge gap G with the front end 13 of the ground electrode 12. The center electrode body 5H is inserted in the diameter-reduced hole 46 through a heat resistant adhesive. To a rear end of the center electrode body 5H, a flange head 53 is provided to engage with the step portion 48 of the insulator 4. The front end of the cylindrical projection 52 forms the spark discharge gap G with the L-shaped end 13 of the ground electrode 12 so as to avoid spark discharge from occurring near the fuel injection nozzle 51. This enables to prevent a geometrical change of the fuel injection nozzle 51 which otherwise would be subjected to spark erosion. It is observed that a plurality of slits 5A may be circumferentially provided as shown in Fig. 2 as a modification form of the first embodiment of the invention so as to improve ignitibility.

To the inner space 50 of the center electrode body 5H, an electromagnetic valve body 54 is axially movably provided which is made of a stainless steel bar (SUS403, SUS430 or the like). A lower end of the electromagnetic valve body 54 has a wedge-shaped end 55 to define a valve body B which opens and closes the fuel injection nozzle 51. A rear end of the electromagnetic valve body 54 has a flange head portion 56 which axially forms a plurality of notch-like slits 58 to allow the fuel to pass therethrough. An inner space 60 of the middle axis 6 serves as the fuel passage 11 with the inner space 50 of the center electrode body 5H. A front portion of the inner space 60 of the middle axis 6 forms a recess 61 which accommodates a return spring 57 whose front end is connected to the flange head portion 56 of the electromagnetic valve body 54. An outer surface of a rear portion of the middle axis 6 has a male thread portion 6A secured to the female thread portion 49 of the axial bore 40 by means of an adhesive. To a rear end of the middle axis 6, a flange 63 is provided which engages with a rear open end of the insulator 4 by way of an annular ring 62. By changing a thickness of the annular ring 62, it is possible to readily adjust a lifting amount of the electromagnetic valve body 54. The middle axis 6 forms a magnetic path when an electromagnetic coil 200 is energized. Between the front end of the middle axis 6 and the rear end of the center electrode body 5H, there is provided a gap 64 to accommodate the flange head portion 56 of the electromagnetic valve body 54.

The electromagnetic coil 200 has a coil body 20 embedded in a synthetic resin body 2 so as to form a fuel injection valve FB with the valve body B of the electromagnetic valve body 54. The synthetic resin body 2 has the same diameter as the rear end 33 of the metallic shell 3, and having a cylindrical portion 21 which has an inner diameter sufficiently enough to surround the middle head portion 45 of the insulator 4. An open upper end of the cylindrical portion 21 is sealed by a ceiling lid 22. In the cylindrical portion 21, the coil body 20 of the electromagnetic coil 200 is embedded. In a manner to extend rearward, the ceiling lid 22 has a central connection passage 23 connected to the inner space 60 (fuel passage 11) of the middle axis 6. Around an outer periphery of the ceiling lid 22, there are integrally provided a high voltage terminal 24 connected to the flange 63 of the middle axis 6, and a voltage control terminal 25 connected to the coil body 20.

The synthetic resin body 2 is made by means of an injection moulding method, and simultaneously manufactured with the coil body 20, connection passage 23, the high voltage terminal 24 and the voltage control terminal 25.

A front end of the metallic hoop 10 is welded to an outer surface of the rear end 33 of the metallic shell 3. To a rear end of the metallic hoop 10, the synthetic resin body 2 is placed. A front end 26 of the synthetic resin body 2 engages with the rear end of the metallic shell 3. The cylindrical portion 21 telescopes the middle head portion 45 of the insulator 4 by way of an O-ring 27 which is provided to ensure sealing and to prevent a flashover. An inner surface 28 of the ceiling lid 22 engages with an upper end surface 65 of the middle axis 6 by way of an O-ring 29. The synthetic resin body 2 is firmly connected to the spark plug 1 by inwardly caulking an upper end of the metallic hoop 10.

With the structure thus described, the connection passage 23 is connected to a common rail of pressurized gasoline, and a high voltage lead cable of an ignition circuit is connected to the high voltage terminal 24 so as to apply a spark plug voltage. To the voltage control terminal 25 connected to the coil body 20, an output signal of an engine control computer (not shown) is fed. When the coil body 20 is energized by the output signal from the engine control computer according to an ignition timing determined depending on operating conditions of the internal combustion engine, the ferromagnetic middle axis 6 is magnetized to attract the electromagnetic valve body 54 upward against the urging force of the return spring 57 which usually acts to close the fuel injection nozzle 51. The upward attraction of the energized coil body 20 causes the valve body B to open the fuel injection nozzle 51 for a predetermined period of time so as to inject the fuel into a combustion chamber of the internal combustion engine. The injected fuel (gasoline) collides with the front end 13 of the ground electrode 12 to break-up the fuel to partly evaporate it in the combustion chamber of the internal combustion engine. In synchronization with the injected fuel, a high voltage is applied to the high voltage terminal 24 to establish the spark discharge at the spark discharge gap G so as to ignite the vaporized fuel.

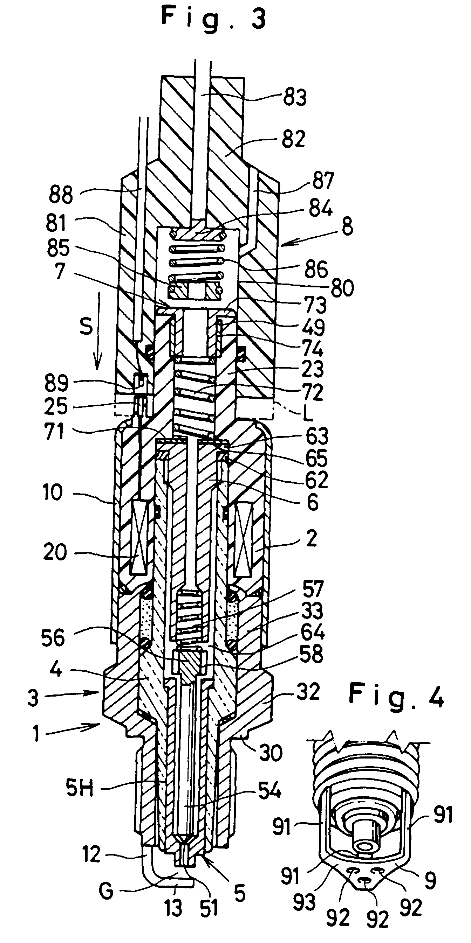

Fig. 3 shows a second embodiment of the invention in which a high voltage terminal 7 is incorporated into the connection passage 23 of the synthetic resin body 2 provided in the first embodiment of the invention. The high voltage terminal 7 is accommodated into the connection passage 23, and having a coil spring 72 engaging with the upper end surface 65 of the middle axis 6 by way of a copper packing 71. The high voltage terminal 7 further has a rear flange 73 and a male thread cylinder 74 which is secured to the female thread portion 49 by way of the adhesive. The rear flange 73 is located to cover an upper end of the connection passage 23. To the connection passage 23, a plug cap 8 is connected which has a central recess 80 which accommodates the connection passage 23.

The plug cap 8 is made of a synthetic resin, and having a cylindrical portion 81 in which the central recess 80 is provided. An upper end of the cylindrical portion 81 is sealed by a ceiling portion 82. In the ceiling portion 82 of the plug cap 8, a high voltage cable 83 is concentrically embedded whose front end is electrically connected to a disc-shaped terminal metal 84 which is accommodated in the central recess 80. From the terminal metal 84, a coil spring 86 is depended whose front end has a free terminal 85.

On an outer periphery of the ceiling portion 82, a fuel supply passage 87 is provided to communicate with the central recess 80. In an wall of the cylindrical portion 81, a voltage control lead wire 88 is embedded whose front end has a plug metal 89 which is adapted to be electrically connected to the voltage control terminal 25.

When the plug cap 8 is axially slid along the connection passage 23 in the direction as shown by an arrow S in Fig. 3, the plug cap 8 stops at the position shown by dot-dash lines L so as to bring the free terminal 85 into engagement with the rear flange 73 of the high voltage terminal 7, while at the same time, connecting the plug metal 89 to the voltage control terminal 25.

With the use of the plug cap 8, it is possible to ease a maintenance, and readily connecting the high voltage lead cable, fuel pipe and voltage control lead wire to the spark plug having a fuel injector valve 100.

Fig. 4 shows a modification from of the second embodiment of the invention in which a fuel collider means 9 is provided on an extension line of the fuel injection nozzle 51 instead of the ground electrode 12. The fuel collider means serves as a ground electrode, and generally having a triangular plate 93 to enlarge an area on which the injected fuel is impinged. The triangular plate 93 further has three holes 92 and three legs 91 which is welded to the front end of the metallic shell 3. The triangular plate 93 makes it possible to facilitate break-up of the injected fuel so as to enhance ignition.

It is noted that the cylindrical projection 52 may be made in like structure with the fuel collider means 9 (the front end 13) in Fig. 1.

It is observed that the plate of the fuel collider means may be annular, elliptic, polygonal or circular, and the plate may have two or four legs instead of three legs.

It is observed that the triangular plate of the fuel collider means may be porous to facilitate the passage of the injected fuel to the combustion chamber of the internal combustion engine.

## Claims

1. A spark plug having a fuel injector valve comprising:
a metallic shell (3);
a columnar insulator (4) having an axial bore (40) and provided in the metallic shell (3), a front end of the insulator being fixedly secured in the metallic shell and a rear portion of the insulator extending rearwardly beyond the metallic shell;
a tubular centre electrode (5) provided in the axial bore (40) of the insulator (4), an inner space of the centre electrode forming a fuel passage (11) and a front end of the centre electrode forming a fuel injection nozzle (51);
a magnetic valve body (54); and
a coil (20) for electromagnetically actuating the magnetic valve body (54);
wherein a rear portion of the electrode (5) extends rearwardly beyond the metallic shell (3), the magnetic valve body (54) is provided in the fuel passage (11) to open and close the fuel injection nozzle (51) and the coil (20) surrounds the rear portion of the insulator (4) and the rear portion of the electrode (5).

2. A spark plug having a fuel injector valve as claimed in claim 1, wherein the valve has a coil body (20) embedded in a synthetic resin body (2) in which is integrated a high voltage terminal (24) connected to the centre electrode (5), a connection passage (23) connected to the fuel passage (11) and a control voltage terminal (25) connected to the coil body.

3. A spark plug having a fuel injector valve as claimed in claim 2, wherein the synthetic resin body (2) is connected to the metallic shell (3) by a metal hoop (10), and fixedly secured to the metallic shell by means of caulking.

4. A spark plug having a fuel injector valve as claimed in any one of the preceding claims, wherein the centre electrode (5) has a hollow centre electrode body (5H) provided at a front side of the axial bore (40) of the insulator (4), and has a hollow ferromagnetic axis provided at a rear side of the axial bore of the insulator, the magnetic valve body (54) being axially movable in the hollow centre electrode body and having a valve (B) to open and close the fuel injection nozzle.

5. A spark plug as claimed in claim 4, wherein the valve is biased towards the fuel injection nozzle (51) by a return spring (57) provided between the magnetic valve body (54) and the hollow ferromagnetic axis.

6. A spark plug having a fuel injector valve as claimed in claim 4 or 5, wherein the hollow ferromagnetic axis has a flange portion (63) secured to a rear end of the insulator (4) by way of an annular ring (62) in order to adjust a lifting amount of the valve body (54) by a thickness of the annular ring.

7. A spark plug having a fuel injector valve as claimed in any one of the preceding claims, wherein a front end of the centre electrode (5) has a cylindrical projection (52) whose front end forms a spark discharge gap (G) with a ground electrode (13) welded to a front end of the metallic shell (3).

8. A spark plug having a fuel injector valve as claimed in any one of the preceding claims, wherein a fuel collider means is provided on an imaginary line extending from the fuel injection nozzle (51) so that fuel injected via the nozzle (51) will impinge thereon.

## Patentansprüche

1. Zündkerze mit einem Kraftstoffeinspritzventil, umfassend:
ein Metallgehäuse (3);
einen zylindrischen Isolator (4) mit einer axialen Bohrung (40), der in dem Metallgehäuse (3) vorgesehen ist, wobei ein vorderes Ende des Isolators fest in dem Metallgehäuse befestigt ist, und ein hinterer Teil des Isolators nach hinten über das Metallgehäuse hinausragt;
eine rohrförmige Mittelelektrode (5) in der axialen Bohrung (40) des Isolators (4), wobei ein Innenraum der Mittelelektrode einen Kraftstoffkanal (11) bildet, und ein vorderes Ende der Mittelelektrode eine Kraftstoffeinspritzdüse (51) bildet;
einen Magnetventilkörper (54); und
eine Spule (20) zur elektromagnetischen Betätigung des Magnetventilkörpers (54);
bei der ein hinterer Abschnitt der Elektrode (5) nach hinten über das Metallgehäuse (3) hinausragt, der Magnetventilkörper (54) in dem Kraftstoffkanal (11) vorgesehen ist, um die Kraftstoffeinspritzdüse (51) zu öffnen und zu schließen, und die Spule (20) den hinteren Abschnitt des Isolators (4) und den hinteren Abschnitt der Elektrode (5) umgibt.

2. Zündkerze mit einem Kraftstoffeinspritzventil nach Anspruch 1, bei der das Ventil einen Spulenkörper (20) besitzt, der in einen Kunstharzkörper (2) eingebettet ist, in den ein mit der Mittelelektrode (5) verbundener Hochspannungsanschluß (24), ein mit dem Kraftstoffkanal (11) verbundener verbindungskanal (23) und ein mit dem Spulenkörper verbundener Steuerspannunqsanschluß (25) integriert ist.

3. Zündkerze mit einem Kraftstoffeinspritzventil nach Anspruch 2, bei der der Kunstharzkörper (2) mit dem Metallgehäuse (3) über einen Metallbügel (10) verbunden ist und fest gegen das Metallgehäuse verstemmt ist.

4. Zündkerze mit einem Kraftstoffeinspritzventil nach einem der vorhergehenden Ansprüche, bei dem die Mittelelektrode (5) einen in der Mitte hohlen Elektrodenkörper (5H) aufweist, der an einer Vorderseite der axialen Bohrung (40) des Isolators (4) vorgesehen ist, und eine hohle ferromagnetische Achse besitzt, die auf einer Rückseite der axialen Bohrung des Isolators vorgesehen ist, wobei der Magnetventilkörper (54) in dem in der Mitte hohlen Elektrodenkörper axial verschiebbar ist und ein Ventil (B) aufweist, um die Kraftstoffeinspritzdüse zu öffnen und zu schließen.

5. Zündkerze nach Anspruch 4, bei der das Ventil über eine Rückstellfeder (57), die zwischen dem Magnetventilkörper (54) und der hohlen ferromagnetischen Achse vorgesehen ist, in Richtung zu der Kraftstoffeinspritzdüse (51) vorgespannt ist.

6. Zündkerze mit einem Kraftstoffeinspritzventil nach Anspruch 4 oder 5, bei der die hohle ferromagnetische Achse einen Flanschabschnitt (63) besitzt, der an einem hinteren Ende des Isolators (4) durch einen Ring (62) befestigt ist, um den Hub des Ventilkörpers (54) über die Dicke des Rings zu regulieren.

7. Zündkerze mit einem Kraftstoffeinspritzventil nach einem der vorhergehenden Ansprüche, bei der ein vorderes Ende der Mittelelektrode (5) einen zylindrischen Vorsprung (52) besitzt, dessen vorderes Ende eine Funkenstrecke (G) mit einer Masseelektrode (13) bildet, die an ein vorderes Ende des Metallgehäuses (3) angeschweißt ist.

8. Zündkerze mit einem Kraftstoffeinspritzventil nach einem der vorhergehenden Ansprüche, bei der eine Kraftstoffaufpralleinrichtung auf einer von der Kraftstoffeinspritzdüse (51) ausgehenden gedachten Linie vorgesehen ist, so daß der über die Düse (51) eingespritzte Kraftstoff dort auftrifft.

## Revendications

1. Bougie d'allumage comportant une soupape d'injection de carburant, comprenant :
une enveloppe métallique (3) ;
un isolateur (4) en forme de colonne ayant un alésage axial (40) et disposé dans l'enveloppe métallique (3), une extrémité antérieure de l'isolateur étant montée fixe dans l'enveloppe métallique et une partie arrière de l'isolateur s'étendant vers l'arrière au-delà de l'enveloppe métallique ;
une électrode centrale tubulaire (5) disposée dans l'alésage axial (40) de l'isolateur (4), un espace intérieur de l'électrode centrale constituant un passage (11) de carburant et une extrémité antérieure de l'électrode centrale constituant une buse (51) d'injection de carburant ;
un corps (54) d'électrovanne ; et
une bobine (20) pour actionner de façon électromagnétique le corps (54) d'électrovanne ;
dans laquelle une partie arrière de l'électrode (5) s'étend vers l'arrière au-delà de l'enveloppe métallique (3), le corps (54) d'électrovanne est disposé dans le passage (11) de carburant pour ouvrir et fermer la buse (51) d'injection de carburant et la bobine (20) entoure la partie arrière de l'isolateur (4) et la partie arrière de l'électrode (5).

2. Bougie d'allumage comportant une soupape d'injection de carburant selon la revendication 1, dans lequel la soupape comporte un corps (20) de bobine noyé dans un corps (2) en résine synthétique dans lequel est intégrée une borne (24) de haute tension connectée à l'électrode centrale (5), un passage de liaison (23) relié au passage (11) de carburant et une borne (25) de tension de commande connectée au corps de bobine.

3. Bougie d'allumage comportant une soupape d'injection de carburant selon la revendication 2, dans laquelle le corps (2) en résine synthétique est relié à l'enveloppe métallique (3) par un cercle (10) de métal et est monté fixe, par matage, sur l'enveloppe métallique.

4. Bougie d'allumage comportant une soupape d'injection de carburant selon l'une quelconque des revendications précédentes, dans laquelle l'électrode centrale (5) comprend un corps creux (5H) d'électrode centrale disposé dans une partie antérieure de l'alésage axial (40) de l'isolateur (4), et a un axe ferromagnétique creux disposé dans une partie arrière de l'alésage axial de l'isolateur, le corps (54) d'électrovanne étant mobile axialement dans le corps creux d'électrode centrale et ayant une vanne (B) pour ouvrir et fermer la buse d'injection de carburant.

5. Bougie d'allumage selon la revendication 4, dans laquelle la vanne est poussée vers la buse (51) d'injection de carburant par un ressort de rappel (57) disposé entre le corps (54) d'électrovanne et l'axe ferromagnétique creux.

6. Bougie d'allumage comportant une soupape d'injection de carburant selon la revendication 4 ou 5, dans laquelle l'axe ferromagnétique creux a une partie formant collerette (63) fixée à une extrémité arrière de l'isolateur (4) par l'intermédiaire d'une bague annulaire (62) afin de régler la distance de levée du corps (54) d'électrovanne par l'épaisseur de la bague annulaire.

7. Bougie d'allumage comportant une soupape d'injection de carburant selon l'une quelconque des revendications précédentes, dans laquelle une extrémité antérieure de l'électrode centrale (5) a une saillie cylindrique (52) dont l'extrémité antérieure forme un intervalle (G) de décharge d'étincelle avec une électrode de masse (23) soudée à une extrémité antérieure de l'enveloppe métallique (3).

8. Bougie d'allumage comportant une soupape d'injection de carburant selon l'une quelconque des revendications précédentes, dans laquelle un moyen de percussion de carburant est disposé sur une ligne imaginaire s'étendant depuis la buse (51) d'injection de carburant afin que le carburant injecté par l'intermédiaire de la buse (51) heurte celui-ci.
